# EUROPÄISCHE PATENTANMELDUNG

(11) **EP 3 832 187 A1**
(43) Veröffentlichungstag der Anmeldung: **09.06.2021**
(21) Anmeldenummer: 20203562.2
(22) Anmeldetag: 23.10.2020
(51) Int. Cl.: F16L 41/03

(54) **VERTEILERMODUL**

(30) Priorität: 06.12.2019 DE 202019106813 U
(71) Anmelder: Rebersek, Vinko, 84034 Landshut (DE)
(72) Erfinder: Rebersek, Vinko, 84034 Landshut (DE)
(74) Vertreter: Gustorf, Gerhard

(57) **Zusammenfassung**

1. Das Verteilermodul (10) für Rohrleitungen, hat einen rohrförmigen Verteilerkörper (12) mit einem Eingangstutzen und einem gegenüberliegenden Ausgangsstutzen, die beide einen Gewindeanschluss (14, 26) für die Verbindung mit einem Leitungsrohr haben, sowie mit einem Abzweigstutzen (34) für den Anschluss eines Nebenkanals. Gemäß der Erfindung ist vorgesehen, dass auf den Gewindeanschluss des Eingangsstutzen (14) und/oder des Ausgangsstutzens (26) eine Überwurfmutter (18, 24) mit selbstsichernder Verriegelung aufgeschraubt ist, die ein Anschlussgewinde (42) für die Befestigung eines Leitungsrohrs hat.

## Beschreibung

Die Erfindung betrifft ein Verteilermodul für Rohrleitungen, umfassend einen rohrförmigen Verteilerkörper mit einem Eingangsstutzen und einem gegenüberliegenden Ausgangsstutzen, die beide einen Gewindeanschluss für die Verbindung mit einem Leitungsrohr haben, sowie mit einem Abzweigstutzen für den Anschluss eines Nebenkanals.

Die Erfindung geht dabei aus von dem Gebrauchsmuster DE 20 2019 104 006 des Anmelders. Dort sind der Eingangsstutzen und der Ausgangsstutzen durch einen Hauptkanal miteinander verbunden, von dem seitlich ein Abzweigstutzen absteht, auf den über eine Bajonettverbindung ein Nebenkanal befestigt werden kann. Die Leitungsrohre, die durch den Hauptkanal miteinander verbunden werden sollen, sind dabei unmittelbar auf ein Aussengewinde bzw. in ein Innengewinde der beiden Stutzen geschraubt. Eine Verriegelung in der aufgeschraubten Stellung der Leitungsrohre ist nicht vorgesehen.

Aus EP 1 045 209 A2 ist ein ähnlich ausgebildeter Verteiler bekannt, bei dem ebenfalls keine Maßnahmen zur Verriegelung aufgeschraubter Leitungsrohre getroffen sind. Gleiches gilt auch für die Rohrverbindung nach EP 2 339 218 A1.

Der Erfindung liegt die Aufgabe zugrunde, ein Verteilermodul der eingangs umrissenen Bauart so auszubilden, dass im zusammengebauten Zustand des Anschlussmoduls sowohl am Eingangsstutzen als auch am Ausgangsstutzen durch eine selbstsichernde Drehsperre ein Abschrauben des Gewindeanschlusses verhindert wird.

Zur Lösung dieser Aufgabe ist gemäß der Erfindung vorgesehen, dass auf dem Gewindeanschluss des Eingangsstutzens und/oder des Ausgangsstutzens eine Überwurfmutter mit selbstsichernder Verriegelung aufgeschraubt ist, die ein Anschlussgewinde für die Befestigung des jeweiligen Leitungsrohres hat.

Bei dieser Ausgestaltung des Moduls bilden auf beiden Seiten des Verteilerkörpers die Überwurfmutter und der Rohrleitungsanschluss eine Einheit, die bei der Montage gemeinsam mit dem Gewindeanschluss verbunden wird, während beim Abschrauben des Rohrleitungsanschlusses die Überwurfmutter auf dem Verteilermodul gesichert bleibt und nicht abgeschraubt werden kann.

Nach einem Merkmal der Erfindung besteht die selbstsichernde Verriegelung aus einer von der Überwurfmutter abstehenden, elastischen Zunge, die im aufgeschraubten Zustand der Überwurfmutter in eine Nut des Gewindeanschlusses einschnappt. Vorzugsweise ist dabei diese Nut als Ringnut ausgebildet.

Auf der gegenüberliegenden Seite des Verteilerkörpers kann die selbstsichernde Verriegelung aus einer elastischen Zunge bestehen, die von dem Abzweigkanal absteht und in einen Schlitz der abgeschraubten Überwurfmutter einschnappt.

In allen Fällen ist es von Vorteil, wenn die Überwurfmutter ein viergängiges Gewinde hat, das ein rasches Aufschrauben bzw. Abschrauben ermöglicht.

Die Erfindung ist nachstehend an einem Ausführungsbeispiel erläutert, das in der Zeichnung dargestellt ist. In dieser zeigen:
Figur 1 einen Längsschnitt durch ein Verteilermodul gemäß der Erfindung im zusammengesetzten Zustand,
Figur 2 eine Draufsicht auf das Verteilermodul der Figur 1,
Figur 3 einen Längsschnitt durch den rohrförmigen Verteilerkörper des Verteilermoduls der Figur 1,
Figur 4 einen Schnitt durch die in Figur 1 obere Überwurfmutter,
Figur 5 eine Draufsicht auf die Überwurfmutter der Figur 4,
Figur 6 einen Schnitt durch die in Figur 1 untere Überwurfmutter und
Figur 7 eine Draufsicht auf die nicht aufgeschraubte Überwurfmutter der Figur 6.

Das in der Zeichnung dargestellte Verteilermodul 10 gemäß der Erfindung ist vorzugsweise mit allen seinen Teilen aus Kunststoff hergestellt, wobei allerdings auch eine Herstellung aus Metall möglich ist, beispielsweise Messing.

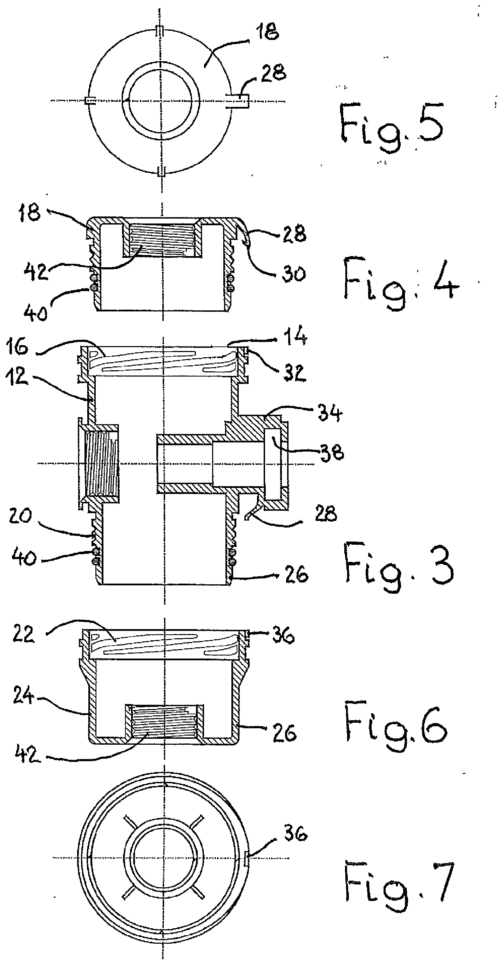

Das Verteilermodul 10 besteht aus einem rohrförmigen Haupt- oder Verteilerkörper 12, der im auseinander genommenen Zustand des Moduls 10 in Figur 3 dargestellt ist. Der Verteilerkörper 12 hat an einem Ende einen Eingangsanschluss 14 mit einem Innengewinde 16 zum Einschrauben einer Überwurfmutter 18, während am anderen Ende der rohrförmige Verteilerkörper 12 einen Ausgangsanschluss 26 mit Aussengewinde 20 hat, auf das das Innengewinde 22 einer weiteren Überwurfmutter 24 aufgeschraubt werden kann. Im zusammengebauten Zustand des Verteilermoduls 10 dienen an beiden Enden O-Ringe 40 zur Abdichtung der jeweiligen Überwurfmutter 18 bzw. 24.

In jeder Überwurfmutter 18, 24 ist ein nach innen vorstehender Gewindestutzen 42 ausgebildet, in den ein nicht gezeigtes Leitungsrohr eingeschraubt werden kann. Dieses wird gemeinsam mit der zugehörigen Überwurfmutter 18 bzw. 24 als Einheit mit dem Verteilerkörper 12 des Moduls 10 verbunden.

Im aufgeschraubten Zustand der in den Figuren oberen Überwurfmutter 18 wird diese durch eine Verdrehsicherung verriegelt, die aus einer elastischen Zunge 28 besteht, die einstückig mit der Überwurfmutter 18 ausgebildet ist und von dieser nach einer Seite hin so absteht, dass ihr verdicktes Ende 30 in eine Ringnut 32 des Eingangsanschlusses 14 elastisch einschnappt. In diesem selbstgesicherten Zustand kann die Überwurfmutter 18 nicht mehr aus den Innengewinde 16 des Eingangsanschlusses 14 ausgeschraubt werden, sondern ermöglicht lediglich ein Abschrauben des nicht gezeigten Leitungsrohres aus dem Gewindestutzen 42 der Überwurfmutter 18.

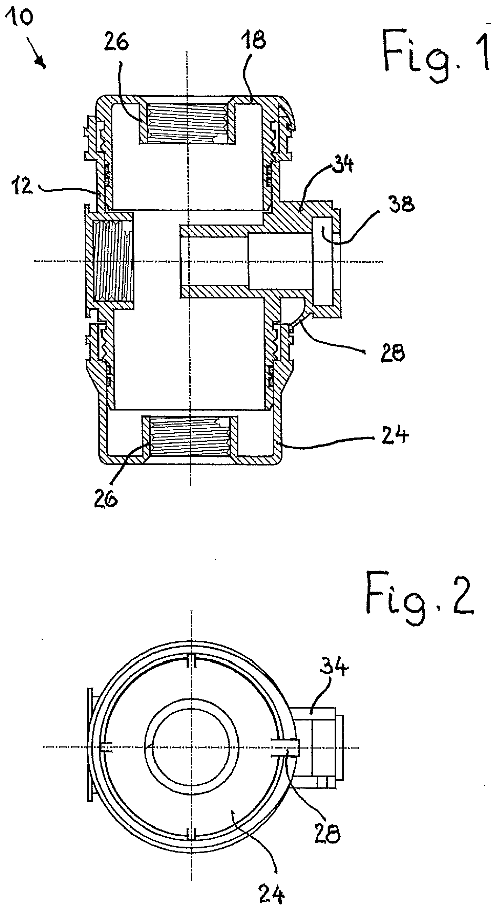

Am gegenüberliegenden Ende des Verteilerkörpers 12 wird ebenfalls eine selbstsichernde Verriegelung der Überwurfmutter 24 erreicht, hier ebenfalls durch eine elastische Zunge 28, die von einem seitlichen Abzweigkanal 34 absteht. Wenn in der Stellung der Figur 1 die Überwurfmutter 24 auf das Aussengewinde 20 des Ausgangsanschlusses 26 aufgeschraubt ist, schnappt auch hier das Ende der Zunge 28 in eine axiale Schlitzausnehmung 36 der aufgeschraubten Überwurfmutter 24 ein.

Damit ist gewährleistet, dass auch an diesem Ende des Moduls 10 beim Abschrauben eines Leitungsrohres aus dem Gewindestutzen 42 keine Drehung der Überwurfmutter 24 möglich ist.

Der Abzweigkanal 24 hat, ähnlich wie beim Stand der Technik nach DE 20 2019 104 006, gegenüberliegende Ausnehmungen 38 für den Bajonettanschluss einer Nebenleitung.

## Patentansprüche

1. Verteilermodul (10) für Rohrleitungen, umfassend einen rohrförmigen Verteilerkörper (12) mit einem Eingangstutzen und einem gegenüberliegenden Ausgangsstutzen, die beide einen Gewindeanschluss (14, 26) für die Verbindung mit einem Leitungsrohr haben, sowie mit einem Abzweigstutzen (34) für den Anschluss eines Nebenkanals, **dadurch gekennzeichnet, dass** auf den Gewindeanschluss des Eingangsstutzen (14) und/oder des Ausgangsstutzens (26) eine Überwurfmutter (18, 24) mit selbstsichernder Verriegelung aufgeschraubt ist, die ein Anschlussgewinde (42) für die Befestigung eines Leitungsrohrs hat.

2. Verteilermodul nach Anspruch 1, **dadurch gekennzeichnet, dass** die selbstsichernde Verriegelung aus einer von der Überwurfmutter (18) seitlich abstehenden, elastischen Zunge (28) besteht, die im aufgeschraubten Zustand der Überwurfmutter (18) in eine Nut (32) des Gewindeanschlusses (14) einschnappt.

3. Verteilermodul nach Anspruch 2, **dadurch gekennzeichnet, dass** die Nut als Ringnut (32) ausgebildet ist.

4. Verteilermodul nach Anspruch 1, **dadurch gekennzeichnet, dass** die selbstsichernde Verriegelung aus einer elastischen Zunge (28) besteht, die von dem Abzweigkanal (34) absteht und in eine schlitzförmige Nutausnehmung (36) der aufgeschraubten Überwurfmutter (24) einschnappt.

5. Verteilermodul nach einem der vorhergehenden Ansprüche, **dadurch gekennzeichnet, dass** die Überwurfmutter (18, 24) ein viergängiges Gewinde hat.
